# EUROPEAN PATENT APPLICATION

(11) **EP 0 867 466 A1**
(43) Date of publication of application: **30.09.1998**
(21) Application number: 98105626.0
(22) Date of filing: 27.03.1998
(51) Int. Cl.: C08K 3/22, C08L 23/02, B41M 5/36

(54) **Polyolefin resin composition for laser marking**

(30) Priority: 28.03.1997 JP 77452/97
(71) Applicant: Japan Polychem Corporation, Tokyo-To (JP); Rhombic Corporation, Yokkaichi-shi, Mie (JP)
(72) Inventor: Matsuoka, Kenji, 1, Toho-cho, Yokkaichi-shi, Mie (JP); Tsutsumi, Ikuo, 1, Toho-cho, Yokkaichi-shi, Mie (JP); Kobayashi, Yoshio, 1000, Kawajiri-cho, Yokkaichi-shi, Mie (JP)
(74) Representative: VOSSIUS & PARTNER

(57) **Abstract**

A polyolefin resin composition for laser marking which is capable of providing white marks in clear contrast against its own black color on being irradiated with a laser beam, comprising 100 parts by weight of a polyolefin resin and 0.01 to 20 parts by weight of a black pigment mainly comprising a metal oxide.

## Description

This invention relates to a black-colored polyolefin resin composition for laser marking which is used as a molding material for personal articles, domestic appliances, interior and exterior parts and engine parts of automobiles, and the like. More particularly, it relates to a black resin composition capable of providing, on laser marking, white marks, such as letters, patterns, symbols, etc., having improved visibility in clear contrast against the black background.

Molded articles made of polyolefin resins, etc., such as personal articles, domestic appliances, interior and exterior parts and engine parts of automobiles, and the like are often marked with letters, patterns, symbols, etc.

Such marks can be put on the molded articles by applying thermosetting or UV-curing ink, but marking in ink is poorly productive, taking time for ink application and baking and involving many steps. Besides, ink marks lack durability and tend to fall off due to insufficient ink adhesion and insufficient resistance to solvents or chemicals. Productivity could be improved by sticking an adhesive label having marks, but the durability of the adhesive label is insufficient similarly. In addition, the inks or adhesives must be removed from the molded articles for recycling, which has impaired reusability of the molded articles.

On the other hand, marking by laser processing, i.e., laser marking can be carried out easily and rapidly, achieving markedly improved productivity. In laser marking, a laser beam is applied to a resin molded article having incorporated therein a black pigment synchronizing with the wavelength of the laser beam to cause the black pigment to burn and evaporate rapidly. As a result, the black pigment of only the laser beam-irradiated area is released to present a clear contrast between the irradiated area (marked area) and non-irradiated area (background). According to this technique, since the marking is to release only the pigment, the marks are very excellent in solvent resistance, chemical resistance and durability, and the thus marked articles are highly suited to recycling. For these reasons, various laser marking techniques have been studied recently.

For example, JP-A-1-254743 (the term "JP-A" as used herein means an "unexamined published Japanese patent application") teaches that incorporation of titanium dioxide and carbon black into a resin makes laser marking possible. However, when this method is applied to a polyolefin resin composition, the laser marks obtained have a brown or light brown color. The background being black, the marks lack a contrast to the background and have insufficient visibility.

Various proposals have been made in order to make laser marks white. For example, JP-A-4-246456 discloses the technique in which carbon black and/or graphite having a high thermal conductivity is incorporated into a polyester resin so as to provide white laser marks. JP-A-7-238210 teaches that an epoxy resin composition containing carbon black, an antioxidant, and a blue colorant in specific ratios provides white laser marks. However, application of these techniques to a polyolefin resin composition fails to achieve whitening of laser marks.

An object of the present invention is to provide a black-colored polyolefin resin composition suitable for laser marking, which is capable of forming white marks having improved visibility in clear contrast against its own black background when irradiated with a laser beam.

This object has been achieved by the surprising finding that incorporation of a black pigment mainly comprising a metal oxide, such as iron black and calcined pigments, into a polyolefin resin provides a polyolefin resin composition which turns white on being irradiated with a laser beam to present highly visible marks in clear contrast against the background.

The present invention provides a polyolefin resin composition for laser marking (hereinafter simply referred to as a polyolefin resin composition) comprising 100 parts by weight of a polyolefin resin and 0.01 to 20 parts by weight of a black pigment mainly comprising a metal oxide.

Laser beams for laser marking have such wavelengths that strongly synchronize with black components. The black pigments used in the polyolefin resin composition of the present invention rapidly absorb the laser energy and evaporate easily. Therefore, molded articles comprising the polyolefin resin composition of the present invention can be marked with letters, patterns, symbols or any other information at a high speed by laser beam scanning. The color of the marks is white as a result of complete release of the pigment component, thereby giving excellent visibility in distinct contrast against the unmarked area of the molded article being black.

The polyolefin resin which can be used in the present invention is not particularly limited, and those generally used in polyolefin molded products can be used. Suitable polyolefin resins include ethylene homopolymers, such as low-pressure polyethylene, medium-pressure polyethylene, high-pressure polyethylene, and linear low-density polyethylene; ethylene series resin (ethylene copolymer), such as ethylene-propylene copolymers; propylene hompolymers, such as stereoregular polypropylene; propylene series resin (propylene copolymer), such as propylene-ethylene block copolymers; and other α-olefin series resins, such as stereoregular poly-1-butene and stereoregular poly-4-methyl-1-pentene.

Preferred of them are ethylene homopolymers, ethylene copolymers, e.g., ethylene-propylene copolymers, propylene homopolymers, and propylene copolymers, e.g., propylene-ethylene block copolymers. The ethylene content of the ethylene-propylene copolymer mainly comprising ethylene is about 60 to 95% by weight, and that of the propylene-ethylene block copolymer mainly comprising propylene is about 0.5 to 20% by weight.

The polyolefin resin used in the present invention preferably has an MFR of about 0.1 to 200 g/10 min.

The black pigment which can be used in the present invention is not particularly limited as long as it mainly comprises a metal oxide. The metal oxide as a main component includes iron oxides and complex oxides containing two or more of metals, such as chromium, cobalt, iron, manganese, titanium, and copper. The language "mainly comprising a metal oxide" as used herein is intended to mean that the pigment preferably contains 95% by weight or more of a metal oxide.

Preferred black pigments are those mainly comprising an iron oxide. More specifically, iron black, which mainly comprises iron (II) iron (III) oxide (tri-iron tetroxide) having chemical formula: Fe₃O₄, produces appreciable effects of the present invention.

Those mainly comprising a complex oxide are also preferred. More specifically, calcined pigments mainly comprising a complex oxide of metals selected from the group consisting of chromium, cobalt, manganese, copper, and iron exerts appreciable effects of the present invention. The terminology "complex oxide" as used herein designates a complex of at least two metal oxides selected from chromium oxide, cobalt oxide, manganese oxide, copper oxide, and iron oxide. Specific examples of such complex oxides are those comprising chromium oxide, cobalt oxide, iron oxide, and manganese oxide, and those comprising cobalt oxide, iron oxide, and manganese oxide.

The ratio of the metal oxides constituting the complex oxide is not particularly limited. For example, the content of cobalt oxide, chromium oxide, manganese oxide, copper oxide or iron oxide, if any, is about 20 to 35% by weight, about 25 to 80% by weight, about 5 to 60% by weight, about 15 to 40% by weight, or about 10 to 60% by weight, respectively, based on the total complex oxides.

Black pigments mainly comprising a metal oxide other than the above-described iron black and calcined pigments, such as titanium black (calcined pigment of titanium oxide), are also useful in the present invention.

The iron black and calcined pigments can be used in combination to sufficiently manifest the effects of the present invention. Use of iron black alone is preferred, though.

The black pigment is added in an amount of 0.01 to 20 parts by weight, preferably 0.1 to 10 parts by weight, per 100 parts by weight of the polyolefin resin. If the amount of the black pigment is out of the above range, whitening on laser marking cannot be achieved. That is, less than 0.01 part of the black pigment is too small to absorb sufficient laser energy enough to make marks. On the other hand, more than 20 parts of the pigment absorbs excessive laser energy, and the amount of heat generated on pigment release increases to cause color change of the resin. It will follow that the marked area becomes light brown due to scorching and has poor visibility.

If desired, other conventional black pigments such as carbon black and graphite can be used in combination with the black pigment mainly comprising a metal oxide as far as the effects of the present invention are not impaired. In this case it is preferred that the black pigment mainly comprising a metal oxide be present in a proportion of at least 30% by weight, particularly 50% by weight or more, based on the total pigments. Where carbon black is used in combination, in particular, the proportion of the black pigment mainly comprising a metal oxide is preferably 50% by weight or more based on the total pigments. Where graphite is used in combination, the proportion of the black pigment mainly comprising a metal oxide is preferably 30% by weight or more based on the total pigments.

In order to improve performance of the resulting molded articles in practical use, the polyolefin resin composition can contain various compounding ingredient, such as inorganic fillers, rubber components, and other additives.

The inorganic fillers are added to improve the strength, rigidity and the like of the molded articles or as an extending filler. Suitable inorganic fillers include calcium oxide, magnesium oxide, silica, titanium oxide, aluminum hydroxide, magnesium hydroxide, calcium hydroxide, basic magnesium carbonate, calcium carbonate, barium sulfate, talc, clay, mica, zeolite, whiskers such as fibrous potassium titanate, fibrous magnesium oxysulfate and fibrous aluminum borate, carbon fiber, and glass fiber. The inorganic fillers can be added in an amount of 1 to 60 parts by weight, preferably 20 to 60 parts by weight, per 100 parts by weight of the polyolefin resin.

The rubber component can be added to impart impact resistance and the like to the molded articles. Useful rubber components include polyolefin rubbers, such as an ethylene-propylene copolymer rubber (hereinafter abbreviated as EPM), an ethylene-1-butene copolymer rubber, an ethylene-propylene-1-butene copolymer rubber, an ethylene-propylene-non-conjugated diene copolymer rubber (hereinafter abbreviated as EPDM), an ethylene-1-butene-non-conjugated diene copolymer rubber, an ethylene-propylene-1-butene-non-conjugated diene copolymer rubber, and an ethylene-octene copolymer rubber (e.g., Engage, manufactured by Dow Chemical Co., Ltd.); and styrene robbers, such as a styrene-butadiene copolymer rubber.

Of these rubber components polyolefin rubbers such as EPM and EPDM are preferred. The rubber components to be used usually have a Mooney viscosity (ML₁₊₄) of 10 to 200, preferably 30 to 150, measured at 100°C. The rubber components can be added in an amount of 1 to 40 parts by weight, preferably 10 to 40 parts by weight, per 100 parts by weight of the polyolefin resin.

Additives can be added to the polyolefin resin composition to improve molding properties of the resin composition or environmental adaptability of the resulting molded articles. Useful additives include antioxidants, antistatic agents, light stabilizers, UV absorbers, neutralizing agents, rust inhibitors, lubricants, flame retardants, nucleating agents, dispersants, processing stabilizers, flow improvers, and the like. The kinds and amounts of these additives are decided appropriately in accordance with the end use.

The polyolefin resin composition of the present invention is prepared by compounding the above-described polyolefin resin, black pigment, and, if desired, inorganic fillers, rubber components, and additives. The compounding method is not limited, and any known technique can be adopted. It is preferable for thorough mixing of the polyolefin resin and the black pigment that the components are preferably melt-kneaded by means of an ordinary kneading machine, such as an extruder, a Banbury mixer, a supermixer, a roll, a Brabender Plastograph, and a kneader. An extruder, especially a twin-screw extruder is preferred. The kneading is usually conducted under atmospheric pressure at a temperature of 180 to 260°C, preferably 190 to 230°C.

The method for molding the polyolefin resin composition is not particularly restricted. For example, the resin composition can be molded by extrusion, press molding, injection molding, blow molding, and the like. The effects of the present invention are noticeably manifested particularly when the resin composition is injection molded because the resulting injection molded articles are excellent in surface appearance such as gloss and uniformity.

The resulting molded article can easily and rapidly be marked with letters, patterns, symbols, etc. by scanning with a laser beam. Lasers used for marking are not limited and include gas lasers, such as a carbon dioxide laser, an excimer laser, and an argon laser, and solid lasers, such as a ruby laser, a semiconductor laser, and a YAG laser. In particular, an Nd:YAG laser having a laser wavelength of 1.06 µm (Nd⁺³-doped yttrium-aluminum-garnet single crystal) is preferred. This wavelength synchronizes with a black component very strongly so that the metal oxide-based black pigment used in the present invention rapidly absorbs the laser energy and evaporates. Further, since the polyolefin resin per se shows little absorption at the wavelength, laser marking hardly causes combustion or deterioration of the resin and does not ruin the practical performance of the molded article.

The resulting marks are white in color due to complete release of the pigment component and therefore distinctly visible in clear contrast against the black background.

The present invention will now be illustrated in greater detail with reference to Examples, but it should be understood that the present invention is not construed as being limited thereto. Unless otherwise noted, all the percents are by weight.

### EXAMPLES 1 TO 6 AND COMPARATIVE EXAMPLES 1 TO 6

A black pigment, a polyolefin resin, an inorganic filler, and a rubber component were mixed in a supermixer according to the compounding ratio shown in Table 1 below, and the mixture was melt-kneaded in a twin-screw extruder to prepare black pellets. The pellets were injection molded into a plate specimen of 100 mm in width, 100 mm in length, and 2 mm in thickness. Particulars of the materials used are shown below.

### 1) Black pigment

Iron black: Fe₃O₄ content: 98%
Calcined pigment:
   complex oxide composed of chromium oxide,
   cobalt oxide, manganese oxide and iron oxide;
   chromium oxide content: 26 to 50%
Furnace carbon: average particle size: 20 nm
High-thermal conductivity carbon:
   thermal conductivity: 8.1 cal/cm·sec·°C
Graphite carbon: average particle size: 200 nm

### 2) Polyolefin resin:

Propylene-ethylene block copolymer; ethylene content: 5%

### 3) Inorganic filler

Talc: average particle size: 10 µm
Glass fiber: diameter: 10 µm; length: 3 mm

### 4) Rubber component:

EPM; Mooney viscosity at 100°C (ML₁₊₄): 70

The plate was marked by laser marking under the following conditions, and the contrast between the mark and the background and the visibility of the mark were evaluated in accordance with the following method. The results obtained are shown in Table 1.

### Marking Conditions:

- Apparatus:: Laser Marker Engine SL475H, manufactured by NEC Corporation
- Wavelength:: 1.06 µm (Nd:YAG laser)
- Frequency:: 10 Hz
- Generating power:: 6 W
- Aperture:: 2.0 mm
- Scanning speed:: 700 mm/sec

### Method of Evaluation:

The lightness of the mark and the background was measured with MMP-300A manufactured by Nihon Denshoku Kogyo K.K. to obtain a lightness difference (ΔL*). The greater the light difference, the clearer the contrast.

The visibility of the mark was organoleptically evaluated with the naked eye and rated A (very good), B (good), C (poor) or D (very poor).

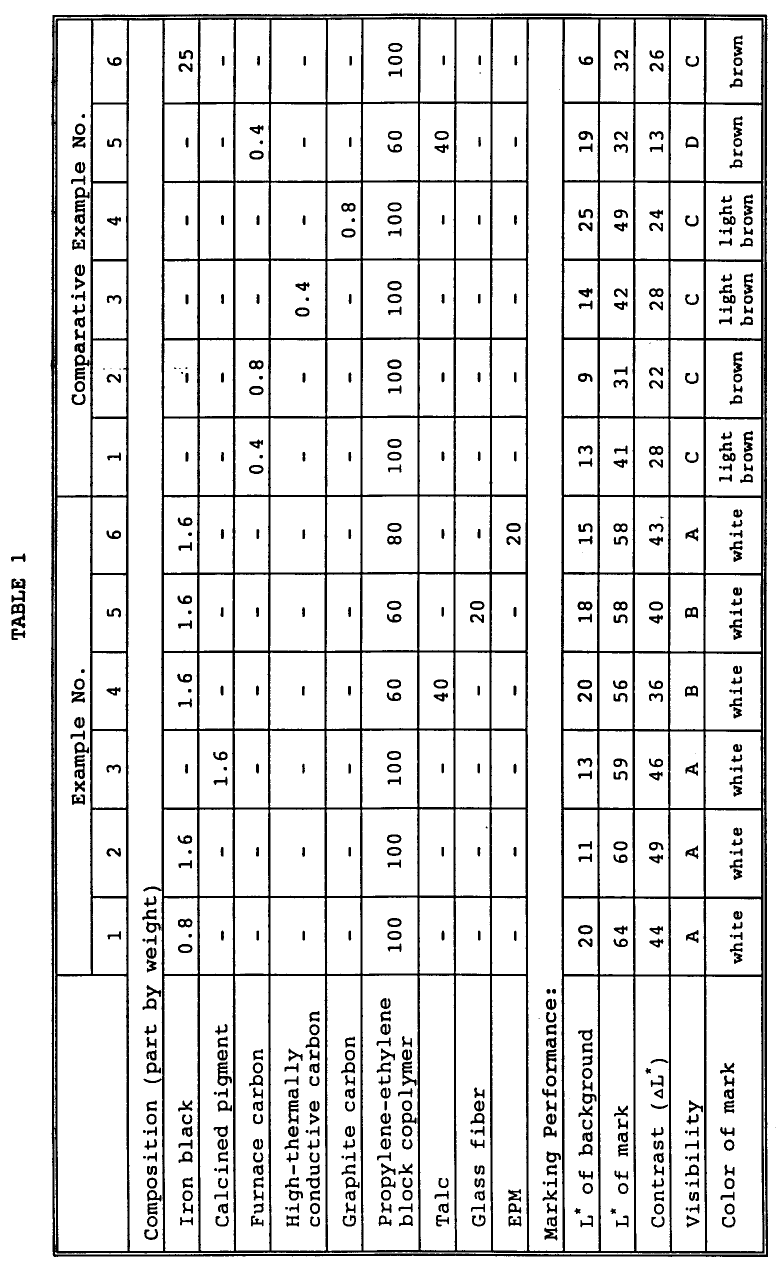

As is apparent from the results in Table 1, incorporation of a black pigment mainly comprising a metal oxide, such as iron black and a calcined pigment, into a polyolefin resin provides a polyolefin resin composition which turns white on being irradiated with a laser beam to present highly visible marks in clear contrast against the background.

While the invention has been described in detail and with reference to specific examples thereof, it will be apparent to one skilled in the art that various changes and modifications can be made therein without departing from the spirit and scope thereof.

## Claims

1. A polyolefin resin composition for laser marking comprising 100 parts by weight of a polyolefin resin and 0.01 to 20 parts by weight of a black pigment mainly comprising a metal oxide.

2. The polyolefin resin composition according to claim 1, wherein said black pigment mainly comprises an iron oxide.

3. The polyolefin resin composition according to claim 1, wherein said black pigment mainly comprises a complex oxide of two or more metals selected from the group consisting of chromium, cobalt, manganese, copper, and iron.

4. The polyolefin resin composition according to claim 1, wherein said black pigment mainly comprises iron (II) iron (III) oxide (tri-iron tetroxide) having chemical formula: Fe₃O₄.

5. The polyolefin resin composition according to claim 3, wherein said complex oxide is a complex oxide comprising chromium oxide, cobalt oxide, iron oxide and manganese oxide, or a complex oxide comprising cobalt oxide, iron oxide and manganese oxide.

6. Use of the polyolefin resin composition according to any of claims 1 to 5 for laser marking.
